# EUROPEAN PATENT APPLICATION

(11) **EP 4 651 030 A1**
(43) Date of publication of application: **19.11.2025**
(21) Application number: 24176789.6
(22) Date of filing: 17.05.2024
(51) Int. Cl.: G06N 3/0455, G06N 3/0895, G06N 3/096

(54) **MACHINE LEARNING MODEL AND TRAINED AUTOENCODER FOR MACHINE LEARNING MODEL ANALYSIS**

(71) Applicant: Aptiv Technologies AG, 8200 Schaffhausen (CH)
(72) Inventor: ARNOLD, Michael, 8200 Schaffhausen (CH)
(74) Representative: Lewis Silkin LLP

(57) **Abstract**

A method of training an autoencoder (202) for analysing a machine learning model (102), an autoencoder (202) for analysing a machine learning model (102), a system and a computer program product, the method comprising: extracting output data from an embedding layer of the machine learning model (102) operating on in-sample data, performing dimensionality reduction on at least a portion of the extracted output data from the embedding layer to obtain first dimensionality reduced data (302), and training the autoencoder (202) to generate corresponding intermediate dimensionality reduced data (304) at the bottleneck (206) of the autoencoder from the at least a portion of the extracted output data.

## Description

### Field

The present disclosure relates to methods of analysing machine learning models, and in particular the training of an autoencoder to analyse embedding layers of a machine learning model. Machine learning models are often used in Advanced Driver Assistance Systems (ADAS).

### Background

Advanced Driver Assistance Systems use Machine Learning (ML) models to significantly enhance vehicular safety and driving expectations. A vehicle incorporating ADAS can make use of sensor data, such as camera or RADAR data, to analyse and determine vehicle driving situations and take appropriate action or warn the operator of the vehicle about appropriate actions to take. The analysis and determination of the sensor data is performed using a machine learning model which has been trained on a data-set of labelled sensor data corresponding to driving situations. The machine learning model uses an artificial neural network to learn connections between the data in the training data-set and driving situations.

Machine learning models address complex challenges in areas such as lane detection, collision avoidance, adaptive cruise control, pedestrian recognition and many more. In each driving situation there are multiple factors which an ML model has to take into account, such as the speed of the ego-vehicle, the speed of other vehicles, the distance to other vehicles, road markings, etc. Each of these factors may have multiple data attributes, both to identify the factor and to describe the factor.

In training, the neural network develops links between the various factors and data attributes related to each driving situation to generate a complex ML model which can accurately determine driving situations from input data.

However, when ML models are treated as black boxes, where the learned principles are unknown or poorly understood, it poses significant challenges for ML developers. This lack of transparency becomes especially problematic when the goals of developers are to improve model performance, extend the capabilities of the model, and optimise data-sets.

As such it is beneficial to analyse the machine learning model at hidden layers of the ML model to understand what is happening deep in the model. Due to the complexity of ML models, data extracted from a hidden layer may have many hundreds or even thousands of dimensions, making conceptualisation of the data impossible for the human mind. Visualisation of the data extracted from a hidden layer can be therefore be carried out using a conventional dimensionality reduction technique. However, the useful output of some more powerful conventional dimensionality reduction techniques, such as T-SNE UMAP or LargeVis, is limited to a fixed data set input to the ML model, which may be termed in-sample data, and cannot generalise to out-of-sample data. Accordingly, to assess new data it is necessary to run a new analysis, which may be time-consuming and computationally expensive.

It is beneficial therefore to derive different methods of visualising the inner workings of the machine learning model which can guide developers to exploit the full capabilities of the ML model in the real world.

### Summary of Invention

According to a first aspect of the invention, there is provided a method of training an autoencoder for analysing a machine learning model, comprising: extracting output data from an embedding layer of the machine learning model operating on in-sample data; performing dimensionality reduction on at least a portion of the extracted output data from the embedding layer to obtain first dimensionality reduced data; and, training the autoencoder to generate corresponding intermediate dimensionality reduced data at the bottleneck of the autoencoder from the at least a portion of the extracted output data.

In this way, out-of-sample data, i.e. test data that the ML model encounters in operation, can be visualised in a format that is usually only available for in-sample data training data. The original dimensionality reduction can be carried out using a conventional method. The trained autoencoder is useful for visualising data extracted from the embedding layer when the ML model is operating on labelled, out-of-sample data, i.e. test data that the ML model encounters in operation but which was not used in the conventional dimensionality reduction method. By training an autoencoder to reduce the dimensionality of output data from an embedding layer when the ML model is operating on out-of-sample data to a format modelled on a classic dimensionality reduction process, such as t-SNE, the resulting data can be analysed to obtain information about the machine learning model. This information can be used to determine how to adapt data-sets for fine-tuning the model.

In embodiments, the method further comprises generating a custom loss function for an autoencoder comprising a concatenation of: an error between the autoencoder bottleneck and the first dimensionality reduced data, and the reconstruction loss of the autoencoder.

In this way, the autoencoder is taught to reconstruct the original data using a specific form of bottleneck, where the bottleneck output itself corresponds to the first dimensionality reduced data. This means that the encodings at the bottleneck represent dimensionality reduced data which can be analysed similarly to a prior art projection, and the efficacy of this bottleneck output data at retaining the relationship between data points is proven by a low reconstruction loss.

Preferably, the portion of the extracted output data can be normalised and centred before the autoencoder generates the intermediate dimensionality reduced data from the at least a portion of the extracted output data.

Preferably, at least one layer of the encoder part of the autoencoder, more preferably the first layer, can employ a tanh activation function. This can be used so that each data point has a value within a zero-centred range between -1 and 1.

In embodiments, the method further comprises analysing the machine learning model using the trained autoencoder by receiving, at the trained autoencoder, at least a portion of output data from an embedding layer of the machine learning model operating on unseen data, and generating, by the autoencoder, second dimensionality reduced data at the bottleneck of the autoencoder.

In this way, the data-processed by the ML model at an embedding layer can be analysed, even though the data-is out-of-sample, data. Additionally, the portion of output data from the embedding layer of the ML model operating on unseen data can be normalised and centred before the autoencoder generates the second dimensionality reduced data.

In embodiments, the method further comprises training a regression model using the autoencoder generated intermediate dimensionality reduced data and determining whether at least a portion of the unseen data corresponds to a predetermined model loss of the machine learning model or greater based on a comparison between the regression model and the second dimensionality reduced data.

In this way, real world data can be evaluated by determining model loss for the dimensionality reduced data created by the guided autoencoder. Areas with input data associated with high expected model loss, can be identified and therefore considered accordingly for future data-set creation with the purpose of targeting existing model weaknesses. The model performance on out-of-sample data can therefore be forecast.

In embodiments, the method further comprises recording the unseen data that corresponds to a predetermined model loss of the machine learning model or greater.

In this way, the recordings can be used to create data-sets, and as such data-sets can be created as the vehicle interacts with its test environment, without significant effort. Further, selective recording of sensor data during test drives reduces downstream data processing and data storage efforts, while simplifying the data-set creation process.

In embodiments, the method further comprises compiling at least a portion of a training data-set for the machine learning model based on the recorded unseen data.

In this way, test data collected during test drives of the vehicle can be evaluated by determining model loss for the dimensionality reduced data created by the guided autoencoder. Areas where the model does not perform as well as required can be identified so that adjustments to the model can be targeted.

In embodiments, the method further comprises performing model analysis on the second dimensionality reduced data to obtain characteristics of the machine learning model.

In this way, the inner workings# of the ML model can be explored. Biases in the available data can be identified, potential issues in the model architecture can be uncovered, and the association of learned principles of the model to specific embedding layers of the model can be visualised.

In embodiments, obtaining characteristics of the machine learning model comprises marking data points within the second dimensionality reduced data with associated meta data to derive principles learned by the machine learning model.

In this way, visualisation of the characteristics of the model can be made simpler. By marking data points, with, for instance, colours, based on available meta data, i.e. the speed of the vehicle, number of objects identified, and the environmental context, the learned structures and principles of the ML model can be easily identified, and conceptualised visually

In embodiments, obtaining characteristics of the machine learning model comprises identifying substantially similar activations in the machine learning model embedding layer.

In this way, scenarios encountered by the ML model can be clustered. For a specific scenario, similar scenarios, which lead to similar activation in the embedding layer of the ML model, can be found and returned so that scenario clusters delineated by the ML model can be visualised for particular embedding layers.

According to a second aspect of the invention, there is provided an autoencoder for analysing a machine learning model, wherein the autoencoder is trained by: extracting output data from an embedding of the machine learning model operating on in-sample data; performing dimensionality reduction on at least a portion of the extracted output data to obtain first dimensionality reduced data; and, training the autoencoder to generate corresponding intermediate dimensionality reduced data at the bottleneck of the autoencoder form the at least a portion of the extracted output data.

In embodiments, the autoencoder is configured to receive, as an input, at least a portion of sensor data from a sensor, and to generate second dimensionality reduced data at the bottleneck of the autoencoder.

In this way, data encountered by the vehicle in test and run through the ML model can be visualised in a format which is usually only available for in-sample data. As such, the workings of the ML model in operation can be visualised.

According to a third aspect of the invention, there is provided a machine learning model system for operating on sensor data related to a vehicle during driving, the system comprising: a machine learning model configured to generate at least one prediction of a vehicle state based on the sensor data (preferably in the context of driving related scenarios); and an autoencoder as described above configured to generate dimensionality reduced data from extracted output data from an embedding layer of the machine learning model corresponding to at least a portion of the sensor data.

In this way, the ML model can be combined with the autoencoder into a single architecture which outputs a prediction for the vehicle and dimensionality reduced data from one or more embedding layers of the model. This provides data required for online analysis of the ML model in an efficient way.

In embodiments, the system further comprises a regression model trained to to predict the model loss of the machine learning model related to the at least a portion of the sensor data.

In this way, the model performance on out-of-sample data can be inferred. By inputting a concatenation of each of the one or more projections into a regression model trained on the ML model development data-set - the in-sample data -, this forecast can be generated for out-of-sample data across all of the out-of-sample embedding layers extracted. Further, the regression model can be part of the same ML model system as the ML model and the autoencoder. As such , a model may be generated which outputs a prediction for the vehicle, , and a loss prediction for the ML model based on the dimensionality reduced data of the embedding layer of the ML model running on our of sample data. As such, the architecture of the system is simplified.

In embodiments, the sensor data comprises at least one of camera, LIDAR, RADAR, velocity, acceleration and yaw sensor data.

In this way, the environment of the vehicle can be visually mapped, for interpretation by the ML model, as well as characteristics of the vehicle interacting with the environment.

According to a fourth aspect of the invention, there is provided a non-transient computer readable medium comprising computer program instructions which when executed by a processor cause the processor to carry out any preceding method.

### Brief Description of Drawings

Illustrative embodiments will now be described with reference to the drawings in which:
**Figure 1** shows an example data processing workflow and ML model analysis applications according to an aspect of the present invention;
**Figure 2** shows a guided autoencoder architecture according to an aspect of the present invention;
**Figure 3a** shows a first projection generated by a dimensionality reduction method according to the prior art.;
**Figure 3b** shows a second projection generated by a dimensionality reduction method according to an aspect of the present invention;
**Figure 4** shows a plurality of projections according to an aspect of the present invention;
**Figure 5** shows a plurality of driving scenarios encountered by an model according to an aspect of the present invention;
**Figure 6a** shows a third projection generated by a dimensionality reduction method according to the prior art.;
**Figure 6b** shows a fourth projection generated by a dimensionality reduction method according to an aspect of the present invention;
**Figure 7** shows a regression model performance evaluation according to an aspect of the present invention.
**Figure 8** shows a representation of data nomenclature according to an aspect of the present invention.
**Figure 9a** shows a greyscale representation of **figure 3a****.**
**Figure 9b** shows a greyscale representation of **figure 3b****.**
**Figure 10** shows a greyscale representation of **figure 4****.**
**Figure 11** shows a greyscale representation of **figure 5****.**
**Figure 12a** shows a greyscale representation of **figure 6a****.**
**Figure 12b** shows a greyscale representation of **figure 6b****.**

### Detailed Description

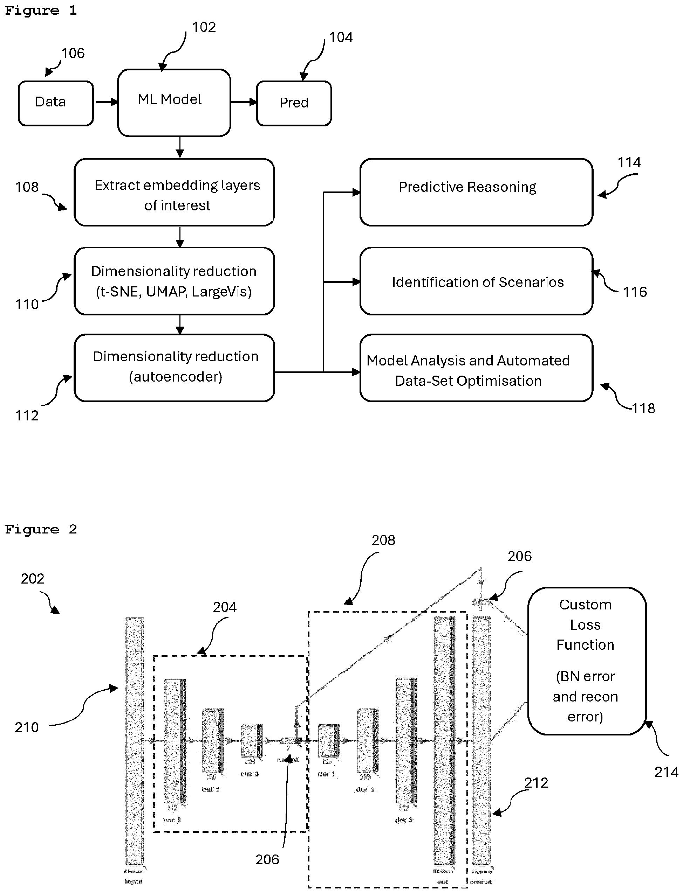

In **figure 1** an example machine learning model data processing workflow and set of model analysis applications are shown. The machine learning model is shown as ML model 102. The ML model 102 is trained to generate predictions 104 for the movement or operation of a vehicle in driving related scenarios based on input data. To train the ML model 102, a training and development data-set 106 is used. Based on the data-set the model 102 can be trained to carry out the predictions 104.

The ML model 102, as discussed above, takes in a number of input data points from internal and external vehicle sensor data, and generates predictions 104. How the ML model 102 generates predictions is not actively coded into the ML model 102, but instead the model 102 learns how to generate appropriate predictions based on the training data-set 106 by passing the data-set through a neural network. The large quantity of weights applied to links of the neural network which form part of the complex internal workings of the ML model are not easily interpreted or understandable to humans, and as such the way in which the ML model 102 processes the data in the neural network is not easily analysed, and the ML model 102 can be viewed as a 'black box'. The ML model 102 is made up of a number of hidden layers, where the ML model 102 generates associations between data points by adjusting its numerous parameters during training to minimize loss and by doing so capture patterns, that enable to predict outcomes.

Certain hidden layers of the ML model 102 are considered embedding layers, which can be selected by a developer for analysis. An embedding layer in a machine learning model is used to map high-dimensional inputs into a lower-dimensional, continuous vector space, where the output (embeddings) represent these inputs in a way that preserves contextual relationships.. The input data to the model may comprise very high dimensional data. The dimensionality of the data may increase or decrease throughout the layers of the ML model. In seeking to understand how an ML model is operating, it is useful to analyse the outputs of one or more embedding layers. The output of the hidden layers, and the embedding layers, may be very high dimensional data, which is not visualisable or interpretable by humans.

As such, at step 108, the output of at least one embedding layer of interest is extracted from the machine learning model 102. However, the output of any given embedding layer may still include high dimensional data that is difficult or impossible for the human mind to conceptualise, understand and assess. Dimensionality reduction can make the data easier to visualise or otherwise conceptualise by representing the data in two or three dimensions. At step 110, a dimensionality reduction process is carried out on at least a portion of the output data of the extracted embedding layer(s). This process may be t-SNE, UMAP, LargeVis, or any other appropriate dimensionality reduction technique. The dimensionality reduction process aims to make high-dimensional data more understandable by mapping it onto a lower-dimensional space. The result of the reduction process can be projected as a data point onto, for example, a two-dimensional image, which may or may not be colour-coded. In this way, the dimensionality reduction process may generate an image showing projections of the data at the embedding layer as respective points in the image, and thus allow the data taken from the embedding layer to be visualised. The main limitation of these dimensionality reduction techniques is that they are trained on fixed data-sets and can usually not generalise to out-of-sample datapoints without additional effort. Moreover, they can be computationally expensive, making analysis slow and therefore difficult or impossible to carry out in real time in a commercial situation.

It will therefore be noted that the ML model 102 at this point has been trained using a development/training data-set 106. The conventional dimensionality reduction processes are particularly effective when applied to in-sample or labelled data. This is because conventional dimensionality reduction processes, such as t-SNE, operate akin to a physics simulation and do not learn a generalizable mapping function from the input space to the embedding space, and therefore are only applicable to the data input to the process. As such the correlations learnt by the t-SNE process cannot be extrapolated to other data. As such, it is possible to expand the in-sample data and re-run t_SNE dimensionality reduction on the new in-sample data, however this is time consuming and resource intensive. The trained autoencoder discussed below addresses this problem....

Whilst, therefore, the inner workings of the ML model can be visualised using the dimensionality reduction processes above, not all data encountered by the ML model is in-sample data, and this data will be interpreted differently by the ML model to the in-sample data. As such, it is desirable to understand how the ML model interprets and processes out-of-sample data.

As such, instead of using the dimensionality reduced projection of the embedding layer to analyse the ML model, the result of the dimensionality reduction step is used to train an autoencoder to perform dimensionality reduction on data from the embedding layer of the ML model at step 112 to produce an output corresponding to the dimensionality reduced projection generated at step 110. The output data of the autoencoder can be projected as points in an image in the same way as the output of the dimensionality reduction step. In the following description and claims, the output of the dimensionality reduction step and/or the autoencoder may be termed a projection. It should be appreciated that the term "projection" in the following description and claims includes the data output from the dimensionality reduction process at step 110 or the trained autoencoder at step 112. This "projection" need not be used to generate a projection image unless specifically stated otherwise.

Step 114 shows a predictive reasoning step which can be carried out on the autoencoder-generated dimensionality reduced projection from data of the embedding layer of the ML model when the ML model is operating on out-of-sample data. Step 116 shows a step of scenario identification which can be carried out using the projection, and step 118 shows a step of model analysis and automated data-set optimisation which can be carried out using the projection. These steps will be discussed in detail later.

For the foregoing description, the dimensionality reduction technique and process will be described as t-SNE, although it will be appreciated that any suitable technique may be used, as set out above.

**Figure 2** shows an exemplary representation of a t-SNE guided autoencoder 202 as described above. The autoencoder 202 takes as an input, flattened, centred and normalised data 210 output from the embedding layer. The flattening, normalisation and centring allow for the data from the embedding layer to be properly represented in the autoencoder. However, it will be appreciated that, for some techniques this process is not required.

The flattening procedure transforms the data into a single vector which can then be condensed by the layers of the encoder 204 of the autoencoder 202. Preferably, the data input to the autoencoder is normalised so it falls between -1 and 1 and centred so that the average is 0. The dimensionality of this data is reduced in this condensing process to the bottleneck 206 of the autoencoder 204.

The aim of the autoencoder 202 is to produce, at the target or bottleneck 206, output data/a projection which corresponds to the t-SNE output data/projection generated at step 110 of **figure 1****.** The bottleneck 206 condenses the input data into, for example, a 2-dimensional representation, although it will be appreciated that the representation may be 3-dimensional or of higher dimension for analysis by a machine rather than a human. In addition, colour may be used to represent one or more further dimensions when data is projected to form a 2-dimensional or 3-dimensional image. The decoder 208 of the autoencoder is designed to reconstruct the data, meaning that the representation of the data at the bottleneck 206 is sufficient to reconstruct the higher dimensionality data input to the autoencoder.

To achieve this, in a conventional autoencoder, the input data is compared to the output data to generate a loss function for the autoencoder 202, which reduces as the output data more closely corresponds to the input data. For the t-SNE guided autoencoder 202 however, a custom loss function is generated. The custom loss function uses a concatenation of the output 212 of the autoencoder 202 and the bottleneck 206 of the autoencoder 202 and compares this to both the t-SNE projection generated at step 110 of **figure 1** and to the input data of the t-SNE guided autoencoder 202.

By this method, a custom loss 214 function is generated which is a sum of the reconstruction loss of the autoencoder (the difference between the input and the output) and the mean squared error of the data points in the t-SNE projection and the data points in the 2D representation at the bottleneck 206 of the autoencoder. The autoencoder 202 is therefore trained, using the custom loss function, to generate t-SNE style projections at the bottleneck which represent the input data in fewer dimensions.

That is to say, the autoencoder is trained both to reproduce the data-set input, as in a classical autoencoder, but also to achieve this through a bottleneck which produces a t-SNE like projection of the input data. Once the autoencoder has been shown to reliably reproduce the input via the bottleneck at the decoder output, only the encoder portion is required to provide the autoencoder generated projections.

At least one dense layer of the autoencoder, preferably the first layer, can employ a tanh activation function, which ensures that each data point has a value within a zero-centred range between -1 and 1.

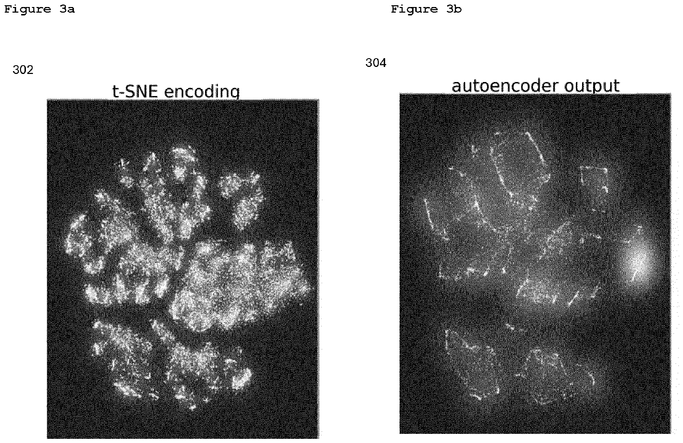

Once the autoencoder is trained using the custom loss function, it can be applied to the task of analysing an embedding layer of the ML model to generate t-SNE like projections of out-of-sample, data. **Figure 3a** shows a t-SNE projection 302 for an ML model operating on in-sample data for an exemplary embedding layer, corresponding to the output of dimensionality reduction step 110. **Figure 3b** shows an autoencoder generated t-SNE-like projection 304 on out-of-sample data from the same embedding layer of the ML model.

In **figures 3a** and **3b** each dot represents an individual sample input to the ML model. Each dot results from the dimensional reduction of the data of the selected embedding layer to 2-dimensional data normalised and centred to a range between -1 and 1. The background colour of the figures indicates density estimates. It will be noted that the overall structures of the two figures are similar. A perfect reconstruction of the in-sample group to the out-of-sample group is not necessary for useful analysis of the embedding layer. Further, the autoencoder, using the above training method, can be tuned to close the gap between the t-SNE representation of **figure 3a** and the autoencoder generated projection of **figure 3b** if required.

Plot 304 of **figure 3b** represents an output of the selected embedding layer of the ML model working on out-of-sample data (that is, data not used to generate the t-SNE projection) which the ML model has encountered on test, and which the ML model did not encounter in the training and development data-set. As discussed above, this data cannot easily be visualised using conventional t-SNE, UMAP or LargeVis dimensionality reduction, or by other conventional dimensionality reduction techniques. Because this data has been visualised using the t-SNE guided autoencoder, information about how the ML model interprets and interacts with test data can be obtained.

**Figure 3b** shows clusters of data points, as well as sparse areas between the data points. Clusters of data points indicate that some associations between the data are stronger than other associations. Clusters can therefore represent how the ML model processes the data at the embedding layer, and can be used to analyse the effect that certain attributes of the data points have on the ML model processing as a whole.

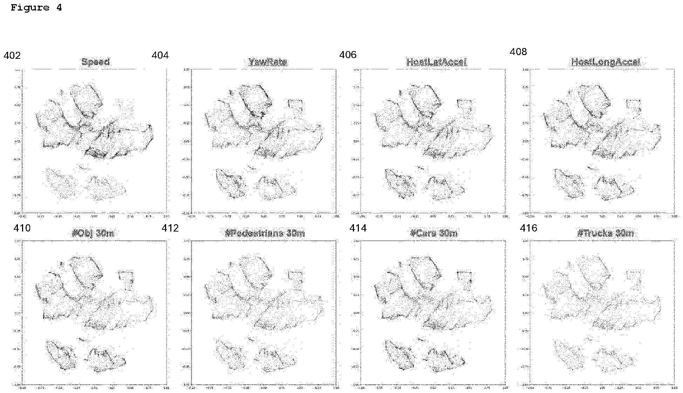

Referring back to step 114 of **figure 1****,** based on the autoencoder projection, a predictive reasoning process may be applied to the data. This will be described with respect to **figure 4****.**

**Figure 4** shows projections of the same embedding layer, using the same data, generated by the t-SNE guided autoencoder. In each projection, data has been colour coded based on a different meta-data value. For instance, projection 402 shows the data colour coded by speed. It can be seen that some clusters are different colours to others. This indicates that different speeds contribute to different areas in the autoencoder-derived projection of the output of the embedding layer. Hence, the ML model assigns some weight to the speed of the vehicle, at least as far as the selected embedding layer is concerned, as speed of the vehicle is highly correlated with associations made by the ML model between data points.

In contrast, projection 408 is colour coded based on the longitudinal acceleration of the vehicle. It can be seen that the entire projection is roughly the same colour, and no particular cluster is has a different colour to any other cluster. This indicates that at the stage of the embedding layer in question the ML model does not assign any particular value to the longitudinal acceleration of vehicle, because it does not correlate to any particular set of associations made by the ML model.

To further illustrate the versatility of this method, projection 404 shows data colour coded based on yaw rate of the vehicle, and a correlation is seen in at least some clusters (some clusters are different colours to others), indicating that yaw rate is an attribute which the ML model assigns some significance to. Projections 410 and 414 show cluster associated variation, indicating that there is some significance to the ML model of both objects at 30 metres and cars at 30 metres. Further, it can be seen that the colouring of data points in these two projections is substantially similar, indicating that cars are conflated with all objects in the ML model to some extent. Projection 412 shows a similar but less intense colouring, again showing correlation between pedestrians and objects in the ML model's processing.

Projections 406 and 416 show little cluster associated colouring, indicating that the ML model does not add significant weight at the embedding layer in question to vehicle lateral acceleration or trucks at 30m. Interestingly, while there is little colour variation for trucks in projection 416 (the number of trucks within 30m is not considered relevant), there is significant colour variation for cars in projection 414 (indicating that different numbers of close cars cause significant changes in the output of the embedding layer). It will be appreciated that the specific associations described herein are particular to the ML model and the training data, and will differ from model to model.

Based on the projections in **figure 4****,** the models learned principles and structures are visualised. This allows for biases in the available data to be identified, allows for potential issues in the model architecture, such as information bottlenecks, to be discovered, and allows for the association and localisation of learned principles to specific embedding layers.

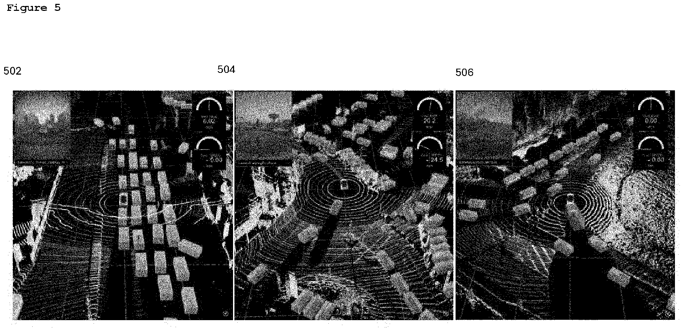

Referring back to step 116 of **figure 1****,** based on the autoencoder projection, a step of scenario identification can be carried out on the projection. This will be described with respect to **figure 5****.**

**Figure 5** shows three scenarios encountered by an ML model in the form of radar data. The original query is shown as radar plot 502, and two close neighbours in the autoencoder generated projection are shown as radar plots 504 and 506. That is, the three individual points corresponding respectively to the three scenarios shown in Fig. 5 were all grouped closely to one another in the projection generated by the autoencoder.

The plots look distinctly different to the human eye, but each scenario nonetheless resulted in similar activation in the embedding layer of the ML model. The scenarios all share a similar ego vehicle speed and number of objects up to 30m away. Conversely, the yaw rate of the vehicle is different between scenarios. This therefore provides insight into how the ML model groups data points in the embeddings.

More generally, by exploiting distance measurements in embedding space, scenarios encountered by an ML model can be clustered. For a specific scenario, other, similar, scenarios can be found which lead to similar activation in the ML model. This allows scenario clusters to be visualised as they are seen or grouped by the model in specific embedding layers. Similar scenarios can be quickly retrieved by using approximate nearest neighbour look up.

The identification of scenarios in this manner therefore allows ML developers to better understand the inner workings of their models.

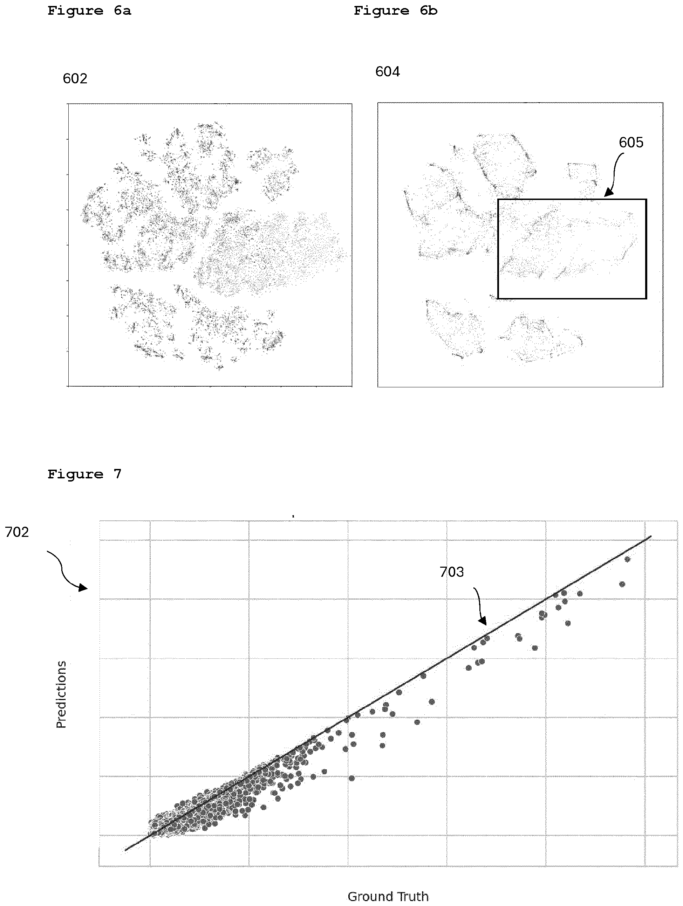

Referring back to step 116 of **figure 1****,** based on the autoencoder projection, a step of model analysis and automated data-set optimisation can be carried out on the projection resulting from the autoencoder. This will be described with respect to **figures 6a** and **6b****.**

Similar to the predictive reasoning approach discussed above, the autoencoder generated projection can be colour coded based on model loss. **Figure 6b** shows a projection colour coded by model loss. Projection 604 shows that certain clusters, which are shaded in yellow, have high model loss, meaning that the ML model struggles to interpret data points reliably in these areas of the embedding layer.

This colour coding can be compared to the projections of **figure 4****.** For instance, the right middle cluster 605 in **figure 6b** shows high model loss (in yellow), and in projection 402 of **figure 4** this same cluster corresponds to low speed values (dark purple). This analysis indicates that the ML model has higher loss when dealing with high speeds.

Projection 602 of **figure 6a** shows a t-SNE projection of the embedding layer colour coded by model loss. It will be appreciated that the general areas of model loss grouped by clusters substantially correspond to the autoencoder generated projection 604. This indicates that this visualisation of model loss translates from the t-SNE projection to the autoencoder generated projection, and thus a regression model for predicting model loss can be trained to predict this model loss for new data, which can help with generating data-sets for training or refining the machine learning model

The regression model itself can be trained using the original development/training data-set of the ML model. Then the regression model can take as an input the autoencoder generated projection for each extracted embedding layer, concatenated into a multi-dimensional vector (e.g., 3 embedding layers of 2 dimensions would result in a 6D input vector). Given the resulting regression model, the forecast of model performance on new data encountered by the ML model can be used to tailor new data-sets for fine-tuning the original model.

**Figure 7** shows a regression model plot 702 where data points which are expected to be handled well by the ML model adhere to the linear relationship between truths and predictions shown by line 703. The plot shows that the regression model has strong predictive capabilities for unseen data. Any datapoints provided to the regression model which do not fall on the line 703 can be considered as data-points or scenarios where the ML model will struggle to correctly predict the movement or operation of the vehicle based on the available data. These data-points can drive the generation of new data-sets to overcome this particular area of loss.

By inputting a concatenation of each of the one or more projections into a regression model trained on the ML model development data-set - the in-sample test data - this forecast can be generated for out-of-sample data across all of the out-of-sample embedding layers extracted. This information can be used to determine how to adapt data-sets for fine-tuning the model based on the data that the model encounters in the real world. In particular, it can be determined for each individual data point in Fig. 7 whether the predicted model loss is equal to or greater than a predetermined threshold. If it is, the corresponding input data can be identified as particularly useful as part of a wider future training data set to overcome the high model loss for that particular area of the model. The input data can be labelled for inclusion as input data in the future training data-set.

The development of new data-sets can be via a pool-based active learning approach, where new data is labelled only when the fine-tuning of the model is required based on the output of the performance predicting regression model.

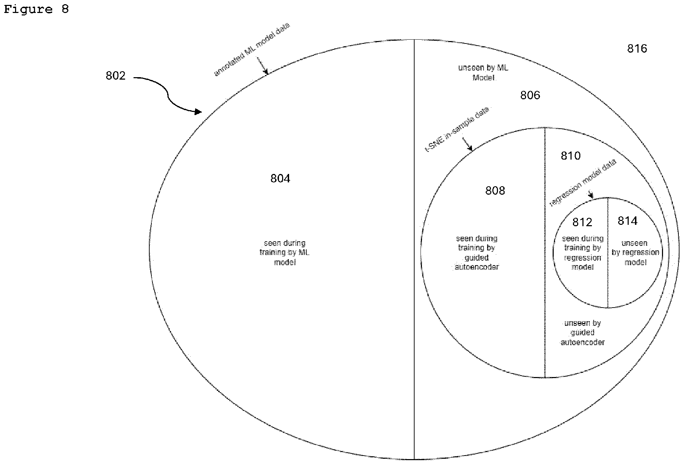

**Figure 8** shows an exemplary data nomenclature for the above discussion. In particular, 802 shows a set of annotated ML model data comprising "seen data" 804 which is data used to train the ML model, and "unseen data" 806 which is data not used to train the ML model but data which forms part of a wider pool of development and test data. Within the unseen data is the data for performing t-SNE or other conventional dimensionality reduction, which is termed "in-sample" data in this application. Within this is data which is used to train the guided autoencoder, 808, and data which is not used to initially train the guided autoencoder, 810 (but can be used as test data). Everything outside these two data types is considered "out-of-sample" for the conventional dimensionality reduction process. This data cannot therefore be interpreted using the t-SNE process applied to the in-sample data. Within the data unseen by the guided autoencoder during training there is data seen during training of the regression model, 812, and data not seen by the regression model during training, 814 (but which can be used as test data). Data 816 outside the annotated ML model data 802 is data which the ML model encounters in operation, for example from a sensor attached to a vehicle. As such, whilst the data out of sample for the conventional dimensionality reduction process, i.e. all data other than 808 and 810, cannot be visualised using the conventional, in sample bound, dimensionality reduction techniques, all data outside data 808, unseen by the guided autoencoder during training, can be visualised using the guided autoencoder, simply by inputting the output of an embedding layer of the ML model running on this data to the autoencoder.

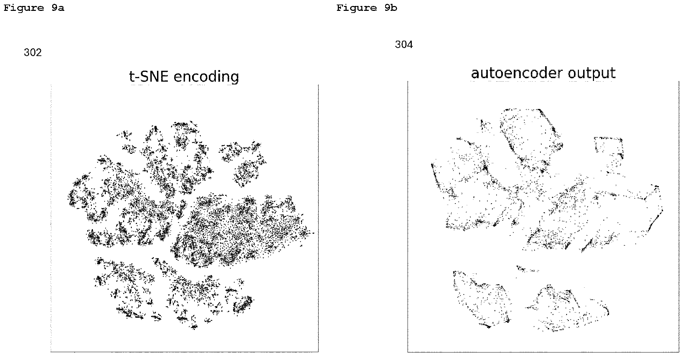

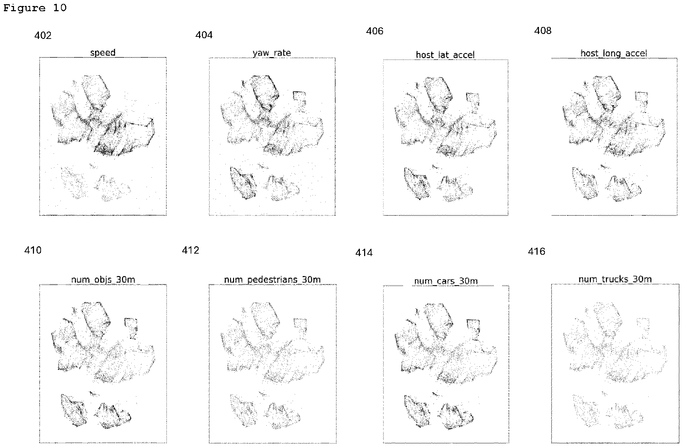

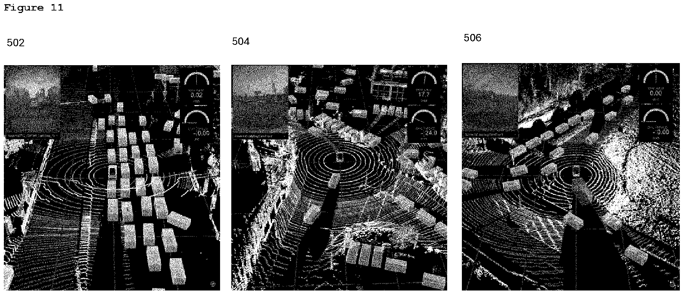

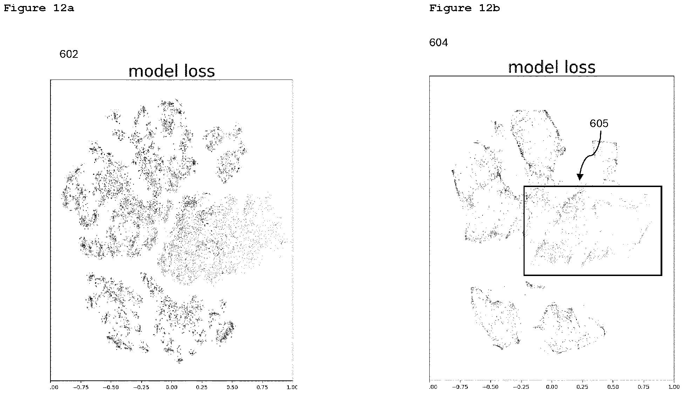

**Figures 9a to 12b** show greyscale versions of the projections discussed above. In these figures, like representations are denoted with the same reference numerals. Where data has been shown as colour coded in **figures 3a to 6b****,** the colours have been directly translated to corresponding greyscale components in **figures 9a to 12b****.** That is, each greyscale value in **figures 9a to 12b** corresponds to a different colour in **figures 3a to 6b****.** For instance, the darker cluster in projection 402 of **figure 10** relating to the relevance of speed of the ego-vehicle to the ML model, shows that the model sees a high relevance of speed of the ego-vehicle, and that the particular dark cluster is associated with the interpretation of low speed values. In corresponding **figure 12b** box 605 shows that there is a high model loss in this cluster of the ML model, showing the ML model has a high model loss when dealing with low speeds of the vehicle. In general, figures showing colour values at the purple end of the spectrum are represented in dark grey, where figures showing colour values at the yellow end of the spectrum are represented in light grey.

In the above, reference to a number of extracted embedding layers is made, and the data contained within (or output by) those layers. It will be appreciated that the t-SNE guided autoencoder may be trained based on a t-SNE projection of a single embedding layer. Further, it will be appreciated that to carry out the steps 114 to 118 of **figure 1****,** the trained autoencoder may be applied to data from a single embedding layer. It will also be appreciated that the t-SNE projection and the autoencoder generated projection may be applied to a sub-set of the data from each extracted embedding layer.

The above discussion concerns an ML model for predicting vehicle movements and operations, and an autoencoder for visualising an embedding layer of the ML model. It will be appreciated that the ML model may incorporate, as part of the model, the autoencoder, the autoencoder being a form of ML model. Further, the above discussion relates to a regression model for predicting model loss, the regression model also being a different form of ML model. It will therefore be appreciated that the ML model may incorporate one or more of the autoencoder and the regression model. That is, the ML model may provide as an output one or more of a vehicle prediction, and an output indicating, for a particular data-set, model loss of the data in the data-set, based on the t-SNE guided autoencoder projection.

The above discussion relates to the interpretation of data by an ML model. The data relates in some embodiments to vehicle driving situations. In one aspect the data is part of a training/development data-set generated externally and used to train the model. In other aspects, the data is generated from a sensor on a vehicle which is running, or otherwise collecting data for, the ML model. In this aspect, the data-set can be considered new data for which the t-SNE guided autoencoder is used for analysis.

The sensor can be a camera, a radar sensor, a lidar sensor, vehicle sensors, such as speedometers, accelerometers, yaw sensors, etc. or a combination of any of the above. In response to determining, by the regression model, that a particular situation, or aspect of the situation, corresponds to a high model loss region of the ML model (e.g. where the predicted model loss is higher than a predetermined threshold), the data from the sensor can be recorded to provide a further training data-set for the ML model and marked as a scenario of interest for downstream data-set creation for ML model refinement.

The recorded data can be labelled with meta-data by human operators, or by another ML model, to provide labelled training data to the ML model which is directed to fine-tuning high loss areas of the ML model.

The ML model may operate in a vehicle as the vehicle is driving, to provide assistance to the driver of the vehicle, such as warning the driver about obstacles, applying emergency brakes, or operating the vehicle autonomously. The vehicle may also include the regression model as described above, and the regression model may provide an output based on determining that at least a portion of the sensor data currently relates to a high loss situation. In response to this, the regression model may, in real-time, cause the sensor or a recording means to record the sensor data. The sensor data may then be used to form a training data-set for the ML model.

The ML model, autoencoder and/or the regression model may be implemented using a physical neural network, or via an emulated neural network. In this aspect, the ML model, autoencoder and/or regression model may be implemented as software for implementation on a processor.

The projections generated using t-SNE, and using the t-SNE guided autoencoder, have been referred to throughout the foregoing as 2D projections. It will be appreciated however, that the projections may also be 3D projections for interpretation by a human, or indeed higher dimension projections for interpretation by a machine.

Reference to a t-SNE guided autoencoder refers to an autoencoder for which training has been guided by the output of t-SNE dimensionality reduction in step 110. However, in the above, an autoencoder guided using any other suitable dimensionality reduction technique can be used instead of a t-SNE guided autoencoder. For instance, a UMAP guided autoencoder or a LargeVis guided autoencoder can be used instead of the t-SNE guided autoencoder. The technique by which the training of the autoencoder is guided will be the same technique by which the embedding layer of in-sample data is dimensionality reduced in step 110. That is, if the autoencoder is guided using a t-SNE projection, then the output of the bottleneck will resemble a t-SNE projection, similarly if UMAP is used to carry out the first fdimensionality reduction, and thus used to train the autoencoder, the output at the bottleneck will resemble UMAP dimensionality reduced data.

The chosen methods of dimensionality reduction have different advantages which may be suitable depending on the ML model to be analysed. For t-SNE, the local structure of the embedding layer can be preserved while transforming high dimensional data into lower dimensions. This technique is effective at revealing clusters in the data and preserving local neighbourhood structures. For LargeVis large-scale high-dimensional data can be scalably visualised. This technique is designed for large scale data-sets and aims to capture both local and global relationships among data points. For UMAP the geometric structure of the data in high-dimensional space is approximated as a low-dimensional manifold in a fast and scalable algorithm. This technique is faster than t-SNE for large data-sets and preserves local and some global structure, it is also greatly versatile and can be used for general non-linear dimensionality reduction tasks beyond visualisation.

The above discussed methods are universal because they are not limited to particular types of machine learning models. The methods combine the benefits of powerful dimensionality reduction techniques, that are optimised for the visualisation of high-dimensional data, with the power to transfer these properties to out-of-sample data points, using the trained guided autoencoder. The resulting encodings can be used for a wide range of model analytics capabilities and data-set optimisation opportunities as shown in **Figure 1****.** With the Predictive Reasoning branch of the workflow, learned principles by the model can be made visible, which is helpful for ML developers aiming to transition from a "black-box" approach to a more transparent, explainable, and efficient model development process. With the Identification of Scenarios these possibilities for gaining further insights are extended. The last branch of the workflow, Model Analytics & Automated Data-set Optimisation addresses model performance metrics directly, opening new ways for tailoring new data-sets using Active Learning techniques. A further advantage is that the universality of the workflow enables its automation. A model agnostic interface for providing embedding data, meta-data and model performance data allows for the automated generation of the corresponding visual data artifacts for model analysis and insight generation that can be used by ML developers.

Thus, although the present invention has been explained with reference to applications of ML models used in vehicles and the automotive industry generally, it is not limited thereto and is applicable to ML models for use in any field and any application. It should also be understood that in one aspect, the present invention provides the trained autoencoder and in other aspects it provides the training and different uses of the trained autoencoder. The different branches 114, 116, 118 of the workflow are all optional and, if any are used, any one or more can be used alone or in combination.

It will be appreciated that the above-described method or methods are suitable for implementation using computer code. As such the above methods may be provided as a non-transient computer readable medium having computer program instructions which when executed cause a processor to carry out the above methods.

It will be understood that the embodiments illustrated above show applications only for the purposes of illustration. In practice, embodiments may be applied to many different configurations, the detailed embodiments of which those skilled in the art will be able to implement.

It will be appreciated that steps of the foregoing may be carried out in different orders depending on the requirements of each specific application. That is some method steps may be taken out of order and carried out when otherwise appropriate for a specific application.

## Claims

1. A method of training an autoencoder for analysing a machine learning model comprising:
extracting output data from an embedding layer of the machine learning model operating on in-sample data;
performing dimensionality reduction on at least a portion of the extracted output data from the embedding layer to obtain first dimensionality-reduced data; and,
training the autoencoder to generate corresponding intermediate dimensionality-reduced data at the bottleneck of the autoencoder from the at least a portion of the extracted output data.

2. The method according to claim 1, further comprising generating a custom loss function for the autoencoder comprising a concatenation of: an error between the autoencoder bottleneck and the first dimensionality-reduced data, and the reconstruction loss of the autoencoder.

3. An autoencoder for analysing a machine learning model, wherein the autoencoder has been trained by:
extracting output data from an embedding layer of the machine learning model operating on in-sample data;
performing dimensionality reduction on at least a portion of the extracted output data to obtain first dimensionality-reduced data; and,
training the autoencoder to generate corresponding intermediate dimensionality-reduced data at the bottleneck of the autoencoder from the at least a portion of the extracted output data.

4. The autoencoder according to claim 3, wherein the autoencoder is configured to receive, as an input, extracted output data from the embedding layer of the machine learning model operating on unseen data, and to generate second dimensionality-reduced data at the bottleneck of the autoencoder.

5. A method of analysing a machine learning model using the autoencoder trained according to the method of claims 1 or 2 or the autoencoder of claim 3 or claim 4, comprising receiving, at the trained autoencoder, at least a portion of output data from an embedding layer of the machine learning model operating on unseen data, and generating, by the autoencoder, second dimensionality-reduced data at the bottleneck of the autoencoder.

6. The method according to claim 5, further comprising training a regression model using the autoencoder generated second dimensionality reduced data and determining whether at least a portion of the unseen data corresponds to a predetermined model loss of the machine learning model or greater based on a comparison between the regression model and the second dimensionality-reduced data.

7. The method according to claim 6, further comprising recording the unseen data that corresponds to a predetermined model loss of the machine learning model or greater.

8. The method according to claim 6 or 7, further comprising compiling at least a portion of a training data-set for the machine learning model based on the recorded unseen data.

9. The method according to any of claims 5 to 7, further comprising performing model analysis on the second dimensionality reduced data to obtain characteristics of the machine learning model.

10. The method according to claim 9, wherein obtaining characteristics of the machine learning model comprises marking data points within the second dimensionality reduced data with associated meta data to derive principles learned by the machine learning model.

11. The method according to claim 9 or 10, wherein obtaining characteristics of the machine learning model comprises identifying substantially similar activations in the machine learning model embedding layer.

12. A machine learning model system for operating on sensor data related to a vehicle during driving, the system comprising:
a machine learning model configured to generate at least one prediction of a vehicle state based on the sensor data; and,
one or more autoencoders according to any of claims 3 and 4 and configured to generate dimensionality-reduced data from extracted output data from an embedding layer of the machine learning model corresponding to at least a portion of the sensor data.

13. A machine learning model system according to claim 12, wherein the system further comprises a regression model trained to predict the model loss of the machine learning model related to the at least a portion of the sensor data

14. A system according to claim 12 or 13, wherein the sensor data comprises at least one of camera, LIDAR, RADAR, velocity, acceleration and yaw sensor data.

15. A non-transient computer readable medium comprising computer program instructions which when executed by a processor cause the processor to carry out the method according to any of claims 1 to 2 and 5 to 11.
